(19) Europäisches Patentamt
European Patent Office
Office européen des brevets

(11) **EP 3 965 001 A1**

(12) **EUROPEAN PATENT APPLICATION**
published in accordance with Art. 153(4) EPC

(43) Date of publication:
**09.03.2022 Bulletin 2022/10**

(21) Application number: **19933022.6**

(22) Date of filing: **10.12.2019**

(51) International Patent Classification (IPC):
***G06K 9/00*** (2022.01)

(52) Cooperative Patent Classification (CPC):
**G06K 9/00**

(86) International application number:
**PCT/CN2019/124327**

(87) International publication number:
**WO 2020/248543 (17.12.2020 Gazette 2020/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.06.2019 CN 201910508062**

(71) Applicant: **Hangzhou Ezviz Software Co., Ltd.
Zhejiang 310051 (CN)**

(72) Inventor: **ZHU, Fenghui
Hangzhou, Zhejiang 310051 (CN)**

(74) Representative: **Yang, Shu
Withers & Rogers LLP
2 London Bridge
London SE1 9RA (GB)**

(54) **ABNORMAL TARGET DETECTION METHOD AND DEVICE, AND STORAGE MEDIUM**

(57)    An abnormal target detection method and device, and a storage medium, relating to the field of intelligent security. The method comprises: determining a first detection result on the basis of an infrared signal detected in a detection region, the first detection result being used for indicating whether the detection region comprises an abnormal target (301); obtaining N frames of images of the detection region, and performing abnormal target detection on the N frames of images to obtain a second detection result, the second detection result being used for indicating whether the detection region comprises an abnormal target, and N being a positive integer (302); and when both the first detection result and the second detection result indicate that the detection region comprises an abnormal target, determining that the detection region comprises an abnormal target (303). In this way, infrared detection and image detection can be combined to determine whether the detection region comprises an abnormal target. Since image detection is not easily interfered by external factors, the detection error can be reduced, and the accuracy of detecting the abnormal target is improved.

FIG. 3

**Description**

**CROSS-REFERENCE TO RELATED APPLICATION**

The present application claims priority to Chinese Patent Application No. 201910508062.6 filed on June 12, 2019 and entitled "ABNORMAL TARGET DETECTION METHOD AND DEVICE, AND STORAGE MEDIUM", which is incorporated herein by reference in its entirety.

**TECHNICAL FIELD**

The present application relates to the field of intelligent security and protection, and in particular, to a method and device for detecting an abnormal target, and a storage medium.

**BACKGROUND**

In today's society, detection devices are installed at some places to ensure safety of life and property. The detection device may be used to detect whether there is abnormal target intrusion in its corresponding detection area, that is, whether there is an abnormal target in its corresponding detection area, so as to issue an alarm when detecting the abnormal target. The abnormal target is usually a human or a vehicle.

At present, in order to improve the detection accuracy, the detection device may detect the detection area based on infrared signals and microwave signals. It is finally determined that an abnormal target exists in the detection area only when it is determined to be so based on both the infrared signals and the microwave signals. Specifically, the detection device may include an infrared sensor, a microwave detector and a processor. Because infrared signals emitted by an abnormal target in the detection area may be detected by the infrared sensor, when the infrared sensor detects infrared signals, it indicates that there may be an abnormal target in the detection area. Then, the detected infrared signals may be converted into electrical signals and sent to the processor, and the processor further determines whether there is an abnormal target in the detection area based on the received electrical signals. The microwave detector can continuously send microwave signals to the detection area, and continuously receive microwave signals reflected from the detection area. When the frequency of the microwave signals received by the microwave detector is different from the frequency of the microwave signals sent out, it indicates that there may an abnormal target in the detection area. Then, the processor needs to further determine whether there is an abnormal target in the detection area based on the difference. When the processor detects the abnormal target in the detection area through the infrared sensor and the microwave detector, it can be determined that there is an abnormal target in the detection area.

However, the above method is still interfered by some external factors, resulting in inaccurate detection results. For example, some small animals that are not abnormal targets, such as flying insects, may climb on the detection device, and thus interference to the detected infrared signals and microwave signals is caused and detection errors are resulted. Alternatively, the hot air generated in sunny days, strong winds and other weather conditions may also interfere with the detected infrared signals and microwave signals, resulting in detection errors.

**SUMMARY**

Embodiments of the present application provide a method for detecting an abnormal target and device, and a storage medium, to resolve the prior-art problem that detection errors are caused because the detection device is easily interfered by external factors. The technical solutions are as follows.

According to an aspect, a method for detecting an abnormal target is provided. The method includes:

determining a first detection result based on an infrared signal detected in a detection area, wherein the first detection result is used to indicate whether an abnormal target exists in the detection area;

acquiring N frames of images of the detection area, and performing abnormal target detection on the N frames of images to obtain a second detection result, wherein the second detection result is used to indicate whether the abnormal target exists in the detection area, and N is a positive integer; and

determining that the abnormal target exists in the detection area, in a case that both the first detection result and the second detection result indicate that the abnormal target exists in the detection area.

In a possible implementation of the present application, said acquiring the N frames of images of the detection area includes:

performing image acquisition on the detection area and determining images acquired within a first reference time period as the N frames of images, while determining the first detection result based on the infrared signal detected in the detection area.

In a possible implementation of the present application, said acquiring the N frames of images of the detection area includes:

performing image acquisition on the detection area and determining images acquired within a first reference time period as the N frames of images, after determining the first detection result based on the infrared signal detected in the detection area, in a case that the first detection result indicates that the abnormal target exists in the detection area.

In a possible implementation of the present application, said performing image acquisition on the detection area and determining the images acquired within the first reference time period as the N frames of images includes:

acquiring an optical image of the detection area through an image sensor every second reference time period within the first reference time period, wherein the second reference time period is less than or equal to the first reference time period;

performing photoelectric conversion on the optical image to obtain electrical signals corresponding to the optical image;

performing digital conversion on the electrical signals corresponding to the optical image to obtain binary image data;

perform pixel conversion on the binary image data to obtain a first image of the detection area, wherein the first image is an invisible image; and

determining the first image obtained within the first reference time period as the N frames of images.

In a possible implementation of the present application, said performing image acquisition on the detection area and determining the images acquired within the first reference time period as the N frames of images includes:

photographing the detection area through a camera every second reference time period within the first reference time period, to obtain a second image of the detection area, wherein the second image is a visible image; and

determining the second image captured within the first reference time period as the N frames of images.

In a possible implementation of the present application, said performing image acquisition on the detection area in a case that the first detection result indicates that the abnormal target exists in the detection area includes:

performing image acquisition on the detection area, and stopping determining the first detection result based on the infrared signal detected in the detection area, in a case that the first detection result indicates that the abnormal target exists in the detection area; and

after said performing abnormal target detection on the N frames of images to obtain the second detection result, the method further includes:

continuing to determine the first detection result based on the infrared signal detected in the detection area, in a case that the second detection result indicates that no abnormal target exists in the detection area.

In a possible implementation of the present application, said performing abnormal target detection on the N frames of images to obtain the second detection result includes:

performing abnormal target detection on the N frames of images;

determining that the abnormal target exists in the detection area, in a case that the abnormal target is detected in one of the N frames of images; and

determining that no abnormal target exists in the detection area, in a case that no abnormal target is detected in each of the N frames of images.

In a possible implementation of the present application, said performing abnormal target detection on the N frames of images includes:

performing abnormal target detection on the N frames of images in parallel; or

determining a first of the N frames of images as a to-be-detected third image, and performing abnormal target detection on the third image; determining that the abnormal target exists in one of the N frames of images, in a case that the abnormal target is detected in the third image; and determining a next frame of the third image as a to-be-detected third image and repeating the step of performing abnormal target detection on the third image until the abnormal target is detected in one of the N frames of images or no abnormal target is detected in each of the N frames of images, in a case that no abnormal target is detected in the third image.

In a possible implementation of the present application, the method further includes:

in the process of performing abnormal target detection on the N frames of images, for a to-be-detected third image in any of the N frames, performing foreground detection on the third image based on a background image model of the detection area, wherein the background image model is used to indicate a background image of the detection area; determining a height and a width of the foreground target, in a case that a foreground target different from the background image of the detection area is detected in the third image; and
determining that the abnormal target exists in the third image, in a case that the foreground target is determined as the abnormal target based on the height and the width of the foreground target.

In a possible implementation of the present application, the background image model of the detection area is a reference image feature of the background image of the detection area; and

said performing foreground detection on the third image based on the background image model of the detection area includes:
performing feature extraction on the third image to obtain a reference image feature of the third image;
calculating a feature residual between the reference image feature of the third image and the reference image feature of the background image of the detection area; and
determining that the foreground target exists in the third image, in a case that the feature residual is greater than or equal to a feature residual threshold.

In a possible implementation of the present application, said performing feature extraction on the third image to obtain the reference image feature of the third image includes:

determining the reference image feature of the third image based on binary image data corresponding to the third image through the following formula:

$$ L = \sum_{p=0}^{p-1} 2^p S(I_p - I_c) $$

wherein, L indicates the reference image feature of the third image, $I_p$ indicates binary image data corresponding to a $p^{th}$ pixel of the third image, S indicates a coordinate position of the $p^{th}$ pixel, and $I_c$ indicates binary image data corresponding to a center pixel of the third image.

In a possible implementation of the present application, after said determining the height and the width of the foreground target, the method further includes:

calculating a ratio between the width and the height of the foreground target to obtain an aspect ratio of the foreground target; and
determining the foreground target as the abnormal target, in a case that the aspect ratio of the foreground target falls in a reference aspect ratio range.

In a possible implementation of the present application, before said determining that the foreground target is the abnormal target based on the height and the width of the foreground target, the method further includes:

determining a height and a width of the third image; and
said determining that the foreground target is the abnormal target based on the height and the width of the foreground target includes:
calculating a ratio between the width and the height of the foreground target to obtain an aspect ratio of the foreground target;
calculating a first ratio between the width of the foreground target and the width of the third image;
calculating a second ratio between the height of the foreground target and the height of the third image; and
determining the foreground target as the abnormal target, in a case that the aspect ratio of the foreground target falls in a reference aspect ratio range, the first ratio falls in a first reference ratio range, and the second ratio falls in a second reference ratio range.

In a possible implementation of the present application, said determining the first detection result based on the infrared signal detected in the detection area includes:

detecting the infrared signal in the detection area through an infrared sensor, and converting the detected infrared signal into electrical signals, wherein the infrared sensor includes at least an infrared probe and at least two Fresnel lenses; and

determining the first detection result based on a vibration amplitude of the electrical signals.

In a possible implementation of the present application, said determining the first detection result based on the vibration amplitude of the electrical signals includes:

determining that the abnormal target exists in the detection area, in a case that the vibration amplitude of the electrical signals falls in a reference amplitude range.

In a possible implementation of the present application, said determining the first detection result based on the vibration amplitude of the electrical signals includes:

determining that the abnormal target exists in the detection area, in a case that the vibration amplitude of the electrical signals falls in a reference amplitude range and a vibration frequency of the electrical signals falls in a reference frequency range.

According to another aspect, a device for detecting an abnormal target is provided. The device includes:

a first detection module, configured to determine a first detection result based on an infrared signal detected in a detection area, wherein the first detection result is used to indicate whether an abnormal target exists in the detection area;

a second detection module, configured to: obtain N frames of images of the detection area, and perform abnormal target detection on the N frames of images to obtain a second detection result, wherein the second detection result is used to indicate whether the abnormal target exists in the detection area, and N is a positive integer; and

a determining module, configured to: determine that the abnormal target exists in the detection area, in a case that both the first detection result and the second detection result indicate that the abnormal target exists in the detection area.

In a possible implementation of the present application, the second detection module is configured to:

perform image acquisition on the detection area and determine images acquired within a first reference time period as the N frames of images, while determining the first detection result based on the infrared signal detected in the detection area. In a possible implementation of the present application, the second detection module is configured to: perform image acquisition on the detection area and determine images acquired within a first reference time period as the N frames of images, after determining the first detection result based on the infrared signal detected in the detection area, in a case that the first detection result indicates that the abnormal target exists in the detection area.

In a possible implementation of the present application, the second detection module is configured to:

acquire an optical image of the detection area through an image sensor every second reference time period within the first reference time period, wherein the second reference time period is less than or equal to the first reference time period;

perform photoelectric conversion on the optical image to obtain electrical signals corresponding to the optical image; perform digital conversion on the electrical signals corresponding to the optical image to obtain binary image data; perform pixel conversion on the binary image data to obtain a first image of the detection area, wherein the first image is an invisible image; and

determine the first image obtained within the first reference time period as the N frames of images.

In a possible implementation of the present application, the second detection module is configured to:

photograph the detection area through a camera every second reference time period within the first reference time period to obtain a second image of the detection area, wherein the second image is a visible image; and determine the second image captured within the first reference time period as the N frames of images.

In a possible implementation of the present application, the second detection module is further configured to:

perform image acquisition on the detection area and trigger the first detection module to stop detecting the detection area through an infrared sensor, in a case that the first detection result indicates that the abnormal target exists in the detection area; and

trigger the first detection module to continue to detect the detection area through the infrared sensor, in a case that the second detection result indicates that no abnormal target exists in the detection area.

In a possible implementation of the present application, the second detection module is configured to:

perform abnormal target detection on the N frames of images; and
determine that the abnormal target exists in the detection area, in a case that the abnormal target is detected in one of the N frames of images; and
determine that no abnormal target exists in the detection area, in a case that no abnormal target is detected in each of the N frames of images.

In a possible implementation of the present application, the second detection module is configured to:

perform abnormal target detection on the N frames of images in parallel; or
determine a first of the N frames of images as a to-be-detected third image, and perform abnormal target detection on the third image; determine that the abnormal target exists in one of the N frames of images, in a case that the abnormal target is detected in the third image; and determine a next frame of the third image as a to-be-detected third image and repeat the step of performing abnormal target detection on the third image until the abnormal target is detected in one of the N frames of images or no abnormal target is detected in each of the N frames of images, in a case that no abnormal target is detected in the third image.

In a possible implementation of the present application, the second detection module includes:

a detection unit, configured to: in the process of performing abnormal target detection on the N frames of images, for a to-be-detected third image in any of the N frames, perform foreground detection on the third image based on a background image model of the detection area, wherein the background image model is used to indicate a background image of the detection area;
a first determining unit, configured to: determine a height and a width of the foreground target, in a case that a foreground target different from the background image of the detection area is detected in the third image; and
a second determining unit, configured to: determine that the abnormal target exists in the third image, in a case that the foreground target is determined as the abnormal target based on the height and the width of the foreground target.

In a possible implementation of the present application, the background image model of the detection area is a reference image feature of the background image of the detection area; and

the detection unit is configured to:
perform feature extraction on the third image to obtain a reference image feature of the third image;
calculate a feature residual between the reference image feature of the third image and the reference image feature of the background image of the detection area; and
determine that the foreground target exists in the third image, in a case that the feature residual is greater than or equal to a feature residual threshold.

In a possible implementation of the present application, the detection unit is configured to:

determine the reference image feature of the third image based on binary image data corresponding to the third image through the following formula:

$$L = \sum_{p=0}^{p-1} 2^p S(I_p - I_c)$$

wherein, L indicates the reference image feature of the third image, $I_p$ indicates binary image data corresponding to a $p^{th}$ pixel of the third image, S indicates a coordinate position of the $p^{th}$ pixel, and $I_c$ indicates binary image data corresponding to a center pixel of the third image.

In a possible implementation of the present application, the detection unit is configured to:

calculate a ratio between the width and the height of the foreground target to obtain an aspect ratio of the foreground target; and

determine the foreground target as the abnormal target, in a case that the aspect ratio of the foreground target falls in a reference aspect ratio range.

In a possible implementation of the present application, the detection unit is configured to:

determine a height and a width of the third image; and
calculate a ratio between the width and the height of the foreground target to obtain an aspect ratio of the foreground target;
calculate a first ratio between the width of the foreground target and the width of the third image;
calculate a second ratio between the height of the foreground target and the height of the third image; and
determine the foreground target as the abnormal target, in a case that the aspect ratio of the foreground target falls in a reference aspect ratio range, the first ratio falls in a first reference ratio range, and the second ratio falls in a second reference ratio range.

In a possible implementation of the present application, the first detection module is configured to:

detect the infrared signal in the detection area through an infrared sensor and convert the detected infrared signal into electrical signals, wherein the infrared sensor includes at least an infrared probe and at least two Fresnel lenses; and
determine the first detection result based on a vibration amplitude of the electrical signals.

In a possible implementation of the present application, the first detection module is configured to:
determine that the abnormal target exists in the detection area, in a case that the vibration amplitude of the electrical signals falls in a reference amplitude range.

In a possible implementation of the present application, the first detection module is configured to:
determine that the abnormal target exists in the detection area, in a case that the vibration amplitude of the electrical signals falls in a reference amplitude range and a vibration frequency of the electrical signals falls in a reference frequency range.

According to another aspect, a detection device is provided. The detection device includes an infrared detection unit, an image processing unit and a processor, and the infrared detection unit includes at least an infrared sensor;

the infrared detection unit is configured to detect an infrared signal in a detection area through the infrared sensor and send the detected signal to the processor;
the image processing unit is configured to: acquire N frames of images of the detection area, perform abnormal target detection on the N frames of images to obtain a second detection result, and send the second detection result to the processor, wherein the second detection result is used to indicate whether the abnormal target exists in the detection area, and N is a positive integer; and
the processor is configured to: determine a first detection result based on the detected signal, and determine that the abnormal target exists in the detection area in a case that both the first detection result and the second detection result indicate that the abnormal target exists in the detection area, wherein the first detection result is used to indicate whether the abnormal target exists in the detection area.

According to another aspect, a computer readable storage medium is provided. The computer readable storage medium stores instructions, and the instructions, when executed by a processor, implement the steps of the method according to any implementation of the foregoing aspect.

According to another aspect, a computer program product with instructions is provided. When the instructions are run on a computer, the computer executes the steps of the method according to any implementation of the foregoing aspect.

Technical solutions provided in the embodiments of the present application achieve the following beneficial effects:

In the embodiments of the present application, a first detection result may be determined based on an infrared signal detected in a detection area, N frames of images of the detection area are obtained and abnormal target detection is performed on the N frames of images to obtain a second detection result. In a case that both the first detection result and the second detection result indicate that an abnormal target exists in the detection area, it is determined that the abnormal target exists in the detection area. In this way, infrared detection can be combined with image detection to determine whether the abnormal target exists in the detection area, which improves the accuracy of detection results.

In addition, because image detection is not easily interfered by external factors, detection errors caused by the infrared sensor and the microwave detector interfered by external factors can be reduced, thereby further improving the accuracy of detection results.

**BRIEF DESCRIPTION OF THE DRAWINGS**

To describe the technical solutions in the examples of the present application more clearly, the following briefly introduces the accompanying drawings required for describing the examples. Apparently, the accompanying drawings in the following description show merely some examples of the present application, and those of ordinary skill in the art may still derive other drawings from these accompanying drawings without creative efforts.

FIG. 1 is a schematic diagram of an implementation environment according to an exemplary embodiment;
FIG. 2 is a schematic diagram of a detection device according to another exemplary embodiment;
FIG. 3 is a flowchart of a method for detecting an abnormal target according to an exemplary embodiment;
FIG. 4 is a flowchart of a method for detecting an abnormal target according to another exemplary embodiment;
FIG. 5 is a waveform diagram of electrical signals generated when a human body moves in a detection area according to an exemplary embodiment;
FIG. 6 is a schematic diagram showing a human body standing upright according to an exemplary embodiment;
FIG. 7 is a schematic diagram showing a human body lying down according to an exemplary embodiment; and
FIG. 8 is a schematic structural diagram of a device for detecting an abnormal target according to an exemplary embodiment.

**DETAILED DESCRIPTION OF THE EMBODIMENTS**

In order to make the objectives, technical solutions and advantages of the present application clearer, implementations of the present application will be further described in detail in combination with the accompanying drawings.
Before a method for detecting an abnormal target provided in the embodiments of the present application is described in detail, an application scenario and an implementation environment related to the embodiments of the present application are described first.
First, the application scenario related to the embodiments of the present application is briefly described.
The method for detecting an abnormal target provided in the embodiments of the present application can be applied to a scenario such as security and protection monitoring or anti-theft alarming. For example, in the anti-theft alarming scenario, a detection device may be installed in an area that needs anti-theft, and the detection device detects whether there is a human in the area. If a human is detected, an alarm is alerted, such that an anti-theft alarm can be alerted when a human invades the area.
Then, the implementation environment related to the embodiments of the present application is briefly described.

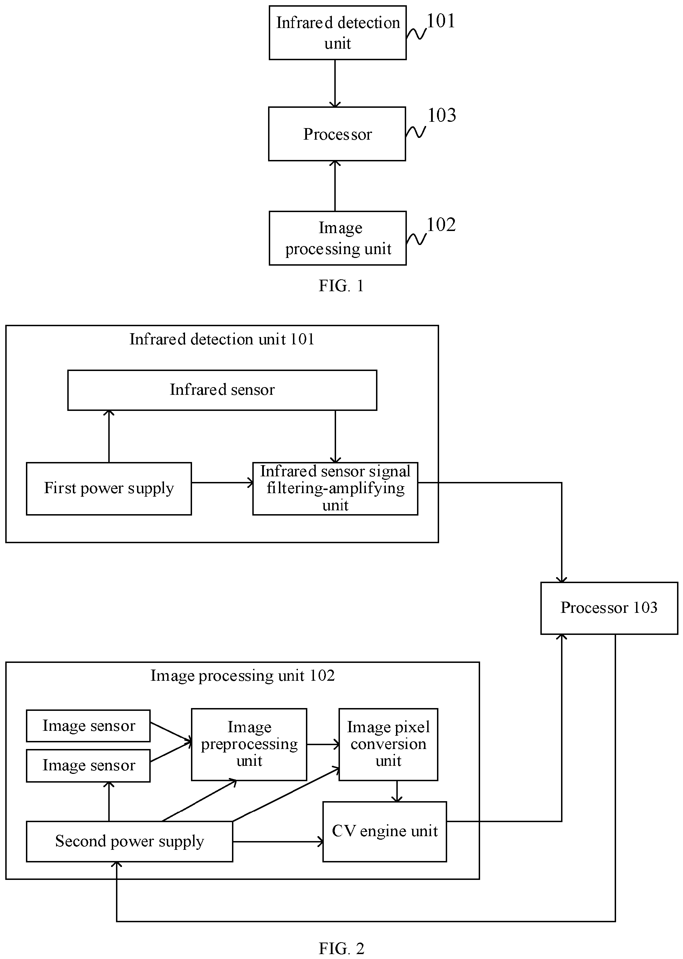

FIG. 1 is a schematic diagram of an implementation environment according to an exemplary embodiment. The implementation environment includes a detection device, which may include an infrared detection unit 101, an image processing unit 102, and a processor 103. Both the infrared detection unit 101 and the image processing unit 102 may communicate with the processor 103.
The infrared detection unit 101 includes at least an infrared sensor and is configured to: detect a detection area through the infrared sensor and send a detected signal to the processor 103. The image processing unit 102 is configured to: acquire N frames of images of the detection area, perform abnormal target detection on the N frames of images to obtain a second detection result, and send the second detection result to the processor 103. The processor 103 is configured to: determine a first detection result based on the detected signal sent by the infrared detection unit 101, and determine whether an abnormal target exists in the detection area based on the first detection result and the second detection result. The first detection result and the second detection result are both used to indicate whether the abnormal target exists in the detection area.
Alternatively, the image processing unit 102 is configured to: acquire N frames of images of the detection area and send the acquired N frames of images to the processor 103. The processor 103 is configured to: determine a first detection result based on the detected signal sent by the infrared detection unit 101, perform abnormal target detection on the N frames of images sent by the image processing unit 102 to obtain a second detection result, and then determine whether the abnormal target exists in the detection area based on the first detection result and the second detection result.
Alternatively, the infrared detection unit 101 is configured to: detect the detection area through the infrared sensor to obtain a first detection result and send the first detection result to the processor 103. The image processing unit 102 is configured to: acquire N frames of images of the detection area, perform abnormal target detection on the N frames of images to obtain a second detection result and send the second detection result to the processor 103. The processor 103 is configured to determine whether an abnormal target exists in the detection area based on the first detection result and the second detection result.

A detection range of the infrared sensor includes the detection area corresponding to the detection device, and the infrared sensor is configured to: receive the infrared signal sent from the detection area and convert the infrared signal into electrical signals. For example, the infrared sensor used in the embodiments of the present application may be an active infrared sensor or a passive infrared (PIR) sensor. There may be one or more infrared sensors, which is not limited in the embodiments of the present application.

For example, referring to FIG. 2, the infrared detection unit 101 may further include a first power supply and an infrared sensor signal filtering-amplifying unit.

The infrared sensor signal filtering-amplifying unit is configured to filter and amplify the electrical signals output by the infrared sensor, and the first power supply is configured to power the infrared detection unit 101.

For example, referring to FIG. 2, the image processing unit 102 may include an image sensor, an image pixel conversion unit, a computer vision (CV) engine unit, and a second power supply.

The image sensor is configured to: acquire an optical image of the detection area, convert the optical image into electrical signals, and then convert the electrical signals into binary image data. The pixel conversion unit is configured to perform pixel conversion on the binary image data to obtain an invisible image that can be recognized by a machine but cannot be seen by human eyes. The CV engine unit is configured to perform abnormal target detection on the invisible image to determine whether the abnormal target exists in the detection area. The second power supply is configured to power the image processing unit 102. Further, referring to FIG. 2, the image processing unit 102 may further include an image preprocessing unit. The image preprocessing unit is configured to process, such as filter, the binary image data sent by the image sensor.

A detection range of the image sensor includes the detection area corresponding to the detection device, and the image sensor is configured to convert the optical image of the detection area into the electrical signals. There may be one or more image sensors. That the image processing unit 102 includes two image sensors in FIG. 2 is only used as an example, and the number of image sensors is not limited in the embodiments of the present application.

For another example, the image processing unit 102 may include a camera, a CV engine unit and a second power supply. A photograph range of the camera includes the detection area of the detection device, and the camera is configured to perform image acquisition on the detection area to obtain a visible image that can be seen by human eyes. The CV engine unit is configured to perform abnormal target detection on the visual image, to determine whether the abnormal target exists in the detection area. The second power supply is configured to power the image processing unit 102.

For example, the image processing unit 102 may be started at the same time as the infrared detection unit 101, that is, infrared detection and image detection may be performed on the detection area at the same time.

For another example, the infrared detection unit 101 may be started first. When the infrared detection unit 101 detects the abnormal target in the detection area, the image processing unit 102 may be started for further image detection.

For still another example, the infrared detection unit 101 may be started first. When the infrared detection unit 101 detects the abnormal target in the detection area, the image processing unit 102 may be started to detect the detection area, and the infrared detection unit 101 is turned off. When the image processing unit 102 detects no abnormal target in the detection area, the infrared detection unit 101 is started again. When the image processing unit 102 detects the abnormal target in the detection area, the image processing unit 102 continues working. In this way, it can ensure that the detection device runs with lower power consumption and the power consumption of the detection device is further reduced.

After the application scenario and implementation environment provided in the embodiments of the present application are described, the method for detecting an abnormal target provided in the embodiments of the present application is described in detail.

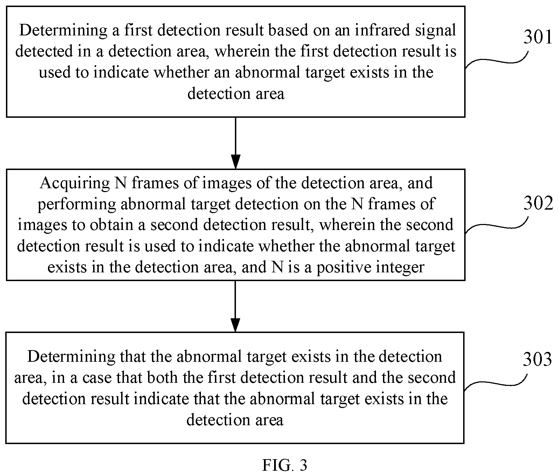

FIG. 3 is a flowchart of a method for detecting an abnormal target according to an exemplary embodiment, which may be applied to the detection device shown in FIG. 1 or FIG. 2. As shown in FIG. 3, the method may include the following steps.

In step 301, a first detection result is determined based on an infrared signal detected in a detection area, wherein the first detection result is used to indicate whether an abnormal target exists in the detection area.

For example, the infrared signal in the detection area is detected by an infrared sensor, and the detected infrared signal is converted into electrical signals; and the first detection result is determined based on a vibration amplitude of the electrical signals.

For example, the infrared sensor includes at least an infrared probe and at least two Fresnel lenses. The infrared sensor may focus the infrared signal in the detection area by the at least two Fresnel lenses, and the infrared signal focused by the two Fresnel lenses is sensed and converted into the electrical signals by the infrared probe.

For example, when the vibration amplitude of the electrical signals falls in a reference amplitude range, it is determined that the abnormal target exists in the detection area.

For another example, when the vibration amplitude of the electrical signals falls in a reference amplitude range and a vibration frequency of the electrical signals falls in a reference frequency range, it is determined that the abnormal target exists in the detection area.

In step 302, N frames of images of the detection area are obtained, and abnormal target detection is performed on the N frames of images to obtain a second detection result, wherein the second detection result is used to indicate whether the abnormal target exists in the detection area, and N is a positive integer.

For example, when the first detection result is determined based on the infrared signal detected in the detection area, image acquisition is performed on the detection area, and images acquired within a first reference time period are determined as the N frames of images.

For another example, after the first detection result is determined based on the infrared signal detected in the detection area, in a case that the first detection result indicates that the abnormal target exists in the detection area, image acquisition is performed on the detection area, and images acquired within a first reference time period are determined as the N frames of images.

For example, within the first reference time period, the image sensor acquires an optical image of the detection area every second reference time period, and the second reference time period is less than or equal to the first reference time period; photoelectric conversion is performed on the optical image to obtain electrical signals corresponding to the optical image; digital conversion is performed on the electrical signals corresponding to the optical image to obtain binary image data; pixel conversion is performed on the binary image data to obtain a first image of the detection area, and the first image is an invisible image; and the first image obtained within the first reference time period is determined as the N frames of images.

For another example, the detection area is photographed through a camera every second reference time period within the first reference time period to obtain a second image of the detection area, and the second image is a visible image; and the second image photographed within the first reference time period is determined as the N frames of images.

For example, when the first detection result indicates that the abnormal target exists in the detection area, image acquisition is performed in the detection area and determining the first detection result based on the infrared signal detected in the detection area is stopped.

For example, if the second detection result indicates that no abnormal target exists in the detection area, determining the first detection result based on the infrared signal detected in the detection area is continued.

For example, abnormal target detection is performed on the N frames of images. If the abnormal target is detected in one of the N frames of images, it is determined that the abnormal target exists in the detection area. If no abnormal target is detected in each of the N frames of images, it is determined that no abnormal target exists in the detection area.

For example, abnormal target detection is performed on the N frames of images in parallel. Alternatively, the first of the N frames of images is determined as a to-be-detected third image, and abnormal target detection is performed on the third image; if the abnormal target is detected in the third image, it is determined that the abnormal target exists in one of the N frames of images; and if no abnormal target is detected in the third image, a next frame of the third image is determined as a to-be-detected third image, and the step of performing abnormal target detection on the third image is repeated until the abnormal target is detected in one of the N frames of images or no abnormal target is detected in each of the N frames of images.

For example, in the process of performing abnormal target detection on the N frames of images, for a to-be-detected third image in any of the N frames, foreground detection is performed on the third image based on a background image model of the detection area, and the background image model is used to indicate a background image of the detection area. If a foreground target different from the background image of the detection area is detected in the third image, a height and a width of the foreground target are determined; and if the foreground target is determined as the abnormal target based on the height and the width of the foreground target, it is determined that the abnormal target exists in the third image.

For example, the background image model of the detection area is a reference image feature of the background image of the detection area. Feature extraction is performed on the third image to obtain a reference image feature of the third image; a feature residual between the reference image feature of the third image and the reference image feature of the background image of the detection area is calculated; and in a case that the feature residual is greater than or equal to a feature residual threshold, it is determined that the foreground target exists in the third image.

For example, the reference image feature of the third image is determined based on binary image data corresponding to the third image through the following formula:

$$L = \sum_{p=0}^{p-1} 2^p S(I_p - I_c)$$

L indicates the reference image feature of the third image, $I_p$ indicates binary image data corresponding to a $p^{th}$ pixel of the third image, S indicates a coordinate position of the $p^{th}$ pixel, and $I_c$ indicates binary image data corresponding to a center pixel of the third image.

For example, a ratio between the width and the height of the foreground target is calculated to obtain an aspect ratio of the foreground target; and if the aspect ratio of the foreground target falls in a reference aspect ratio range, the foreground target is determined as the abnormal target.

For another example, a height and a width of the third image are determined. A ratio between the width and the height of the foreground target is calculated to obtain an aspect ratio of the foreground target. A first ratio between the width of the foreground target and the width of the third image is calculated; and a second ratio between the height of the foreground target and the height of the third image is calculated. If the aspect ratio of the foreground target falls in a reference aspect ratio range, the first ratio falls in a first reference ratio range, and the second ratio falls in a second reference ratio range, it is determined that the foreground target is the abnormal target.

In step 303: In a case that both the first detection result and the second detection result indicate that the abnormal target exists in the detection area, it is determined that the abnormal target exists in the detection area.

When the first detection result indicates that the abnormal target exists in the detection area, and the second detection result also indicates that the abnormal target exists in the detection area, it can be determined that the abnormal target exists in the detection area.

In this embodiment of the present application, a first detection result may be determined based on an infrared signal detected in a detection area, N frames of images of the detection area are obtained and abnormal target detection is performed on the N frames of images to obtain a second detection result. In a case that both the first detection result and the second detection result indicate that an abnormal target exists in the detection area, it is determined that the abnormal target exists in the detection area. In this way, infrared detection can be combined with image detection to determine whether the abnormal target exists in the detection area, which improves the accuracy of detection results. In addition, because image detection is not easily interfered by external factors, detection errors caused by the infrared sensor and the microwave detector interfered by external factors can be reduced, thereby further improving the accuracy of detection results.

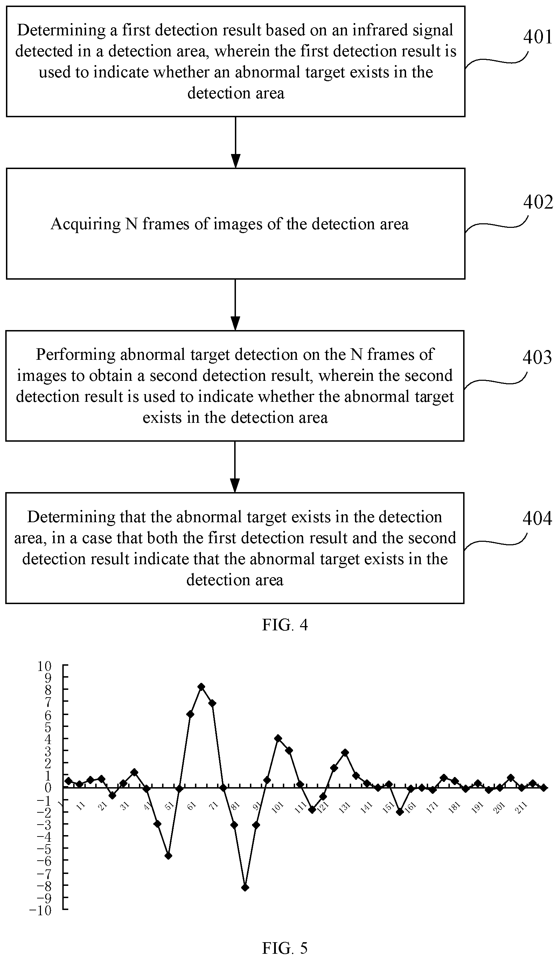

FIG. 4 is a flowchart of a method for detecting an abnormal target according to another exemplary embodiment, which may be applied to the detection device shown in FIG. 1 or FIG. 2, or applied to the processor in the detection device. As shown in FIG. 4, the method may include the following steps.

In step 401, a first detection result is determined based on an infrared signal detected in a detection area, wherein the first detection result is used to indicate whether an abnormal target exists in the detection area.

The abnormal target is a to-be-detected target, which may be set by default by the detection device or set by the user. This is not limited in this embodiment of the present application. For example, the abnormal target may be a human body or a vehicle.

For example, an infrared sensor detects the infrared signal in the detection area, and converts the detected infrared signal into electrical signals. The first detection result is determined based on the electrical signals output by the infrared sensor. A detection range of the infrared sensor may include the detection area.

For example, the infrared sensor includes at least an infrared probe and a Fresnel lens. The Fresnel lens is configured to focus the infrared signal in the detection area, and the infrared probe is configured to sense the infrared signal focused by the Fresnel lens and convert the sensed infrared signal into the electrical signals.

The surface of the Fresnel lens is provided with a series of serrated grooves, and each groove has a different angle from an adjacent groove. There may be one or more Fresnel lenses.

For another example, the infrared sensor includes at least an infrared probe and at least two Fresnel lenses. When the infrared sensor detects the detection area, the at least two Fresnel lenses may focus the infrared signal in the detection area, and the infrared probe senses the infrared signal focused by the at least two Fresnel lenses and converts the sensed infrared signal into the electrical signals.

The infrared signal in the detection area is focused by the at least two Fresnel lenses, such that the infrared sensor can sense the infrared signal sent by objects at a longer distance, thereby expanding the detection range and the detection area of the infrared sensor.

For example, when the infrared sensor includes two Fresnel lenses, the two Fresnel lenses may be installed on the infrared probe side by side. The detection area may be expanded by adjusting an angle between a groove of each one of the two Fresnel lens and an adjacent groove.

For example, the Fresnel lens can focus the infrared signal with specific wavelength and divide the visual area. Specifically, the Fresnel lens can focus the infrared signal with specific wavelength onto the infrared sensor, and divide the detection area into bright areas and dark areas that are arranged alternately.

The specific wavelength may refer to a wavelength of an infrared signal that can pass through the Fresnel lens, and the specific wavelength is generally one wavelength range.

It should be noted that for an object entering the detection area, when the object is in the bright area and the dark area in the same state, intensities of the infrared signals detected by the infrared sensor are different.

For example, the infrared probe may be a quaternary infrared probe with four sensitive elements inside, which can sense the infrared signal focused by the Fresnel lens. After the infrared sensor converts the infrared signal into the electrical signals, the electrical signals may further be preprocessed and the preprocessed electrical signals are analyzed, and the first detection result is determined based on a vibration amplitude of the preprocessed electrical signals.

For example, it is assumed that the infrared sensor is a PIR sensor, and a probe of the PIR sensor is a quaternary PIR sensor probe with four sensitive elements inside, which can sense the infrared signal focused by the Fresnel lens and convert the infrared signal into the electrical signals. In the PIR sensor, signal noise filtering may be performed on the electrical signals, and a power noise and an electrical noise of the device itself are mainly filtered. In an external signal conditioning circuit connected to the infrared sensor, processing such as filtering and amplifying, may be performed on the electrical signals, and the processed electrical signals are analyzed to determine the first detection result based on a vibration amplitude of the processed electrical signals.

In some embodiments, determining the first detection result based on the vibration amplitude of the electrical signals may include the following two implementations.

In the first implementation, when the vibration amplitude of the electrical signals falls in a reference amplitude range, it is determined that the abnormal target exists in the detection area.

The reference amplitude range is a reference amplitude range corresponding to abnormal targets, and may be obtained by making statistics on vibration amplitudes of electrical signals generated by a large number of abnormal targets in different states. For example, if the abnormal target is a human body, statistics on vibration amplitudes of electrical signals detected by the infrared sensor and generated by a same person at different walking frequencies, different people at the same walking frequency or a same person at different positions in the detection area may be made to obtain a reference amplitude range corresponding to the human body.

That is, statistics on the vibration amplitudes of the processed electrical signals are made. When the vibration amplitude of the electrical signals falls in the reference amplitude range, it is determined that the abnormal target exists in the detection area. For example, if the reference amplitude range is 0.1 V to 0.9 V and the vibration amplitude of the electrical signals is 0.2 V, it may be determined that the abnormal target exists in the detection area.

For example, the abnormal target being a human body is taken as an example. If someone invades the detection area, the infrared sensor can receive an infrared signal sent by the human body and convert the infrared signal into electrical signals. Because the temperature of the human body is about 37 degrees, a wavelength of the emitted infrared signal is generally about 9.6 $\mu$m and the vibration amplitude of the converted electrical signals falls in an amplitude range accordingly. Therefore, in the detection process, whether the vibration amplitude of the electrical signals output by the infrared sensor falls in the amplitude range may be determined. When the vibration amplitude of the electrical signals falls in the amplitude range, it is determined that a human body exists in the detection area, that is, human invasion is determined.

In the second implementation, when the vibration amplitude of the electrical signals falls in the reference amplitude range, and a vibration frequency of the electrical signals falls in a reference frequency range, it is determined that the abnormal target exists in the detection area.

The reference frequency range is a reference frequency range corresponding to abnormal targets, and may be obtained by making statistics on reference frequencies of electrical signals generated by a large number of abnormal targets in different states. For example, if the abnormal target is a human body, statistics on vibration frequencies of electrical signals detected by the infrared sensor and generated by a same person at different walking frequencies, different people at the same walking frequency or a same person at different positions in the detection area may be made to obtain a reference frequency range corresponding to the human body.

That is, statistics are respectively made on the vibration amplitude and vibration frequency of the processed electrical signals. Only when the vibration amplitude of the electrical signals falls in the reference amplitude range and the vibration frequency of the electrical signal falls in the reference frequency range, it is determined that the abnormal target exists in the detection area.

For example, it is assumed that the reference amplitude range is 0.1 V to 1.2 V and the reference frequency range is 0.5 Hz to 1 Hz and there are electrical signals with vibration amplitudes of 0.5 V, 0.2 V, 0.1 V, 0.3 V and 0.5 V and a vibration frequency of 0.6 Hz, it can be determined that the vibration amplitudes of the electrical signals fall in the reference amplitude range and the vibration frequency of the electrical signals falls in the reference frequency range, and then it is determined that the abnormal target exists in the detection area.

For example, the closer the abnormal target is to the infrared probe, the greater the amplitude of its electrical signals; and the farther the abnormal target is to the infrared probe, the smaller the amplitude of its electrical signals. When the electrical signals are at a rising edge, it can be determined that the abnormal target is walking from a dark area to a bright area; and when the electrical signals are at a falling edge, it can be determined that the abnormal target is walking from the bright area to the dark area.

Further, a frequency range of electrical signals generated by each of different movement behaviors of the abnormal target can be determined by making statistics on a large amount of data. A type of movement behavior made by the abnormal target may be determined based on the vibration frequency of the processed electrical signals. For example, in a case that the vibration frequency of the electrical signals falls in a frequency range A, it can be determined that the abnormal target moves fast; and in a case that the vibration frequency of the electrical signals falls in a frequency range B, it can be determined that the abnormal target moves slowly.

For example, FIG. 5 is a waveform diagram of electrical signals generated by a person from entering to leaving the detection area. The abscissa is the time and the ordinate is the voltage in unit of 0.1 V. It can be seen from the figure that no one enters the detection area at the first 30 points, and the fluctuating data behind are voltage values of the electrical signals generated when the person walks. The rising edge of the waveform may indicate that the person is walking from the dark area to the bright area, and the falling edge may indicate that the person is walking from the bright area to the dark area. The larger the absolute value of the voltage amplitude, the closer the person is to the infrared probe; and the smaller the absolute value of the voltage amplitude, the farther the person is to the infrared probe.

It should be noted that, in this embodiment of the present application, that the infrared sensor is a PIR sensor is only used as an example. In practice, the infrared sensor may alternatively be an active infrared sensor. For example, the active infrared sensor includes an infrared transmitter and an infrared receiver. The infrared transmitter emits one or more modulated infrared rays to the infrared receiver. When the infrared rays emitted by the infrared transmitter have a same frequency as that of the infrared rays received by the infrared receiver, it may be considered that no abnormal target exists between the infrared transmitter and the infrared receiver, that is, no abnormal target exists in the detection area. When the infrared rays emitted by the infrared transmitter have a different frequency from that of the infrared rays received by the infrared receiver, it may be considered that the abnormal target exists between the infrared transmitter and the infrared receiver, that is, the abnormal target exists in the detection area.

In step 402, N frames of images of the detection area are obtained.

N is a positive integer greater than or equal to 1.

In some embodiments, obtaining the N frames of images of the detection area may include the following two implementations.

In the first implementation, when the first detection result is determined based on the infrared signal detected in the detection area, image acquisition is performed on the detection area and images acquired within a first reference time period are determined as the N frames of images. The first reference time period may be adjusted as needed. For example, the first reference time period may be 200 ms.

That is, the operation of detecting based on the infrared signal in the detection area is performed simultaneously with the operation of acquiring the N frames of images of the detection area, and it is possible to perform infrared detection on the detection area while image acquisition is performed on the detection area and abnormal target detection is performed on the acquired images.

In the second implementation, after the first detection result is determined based on the infrared signal detected in the detection area, when the first detection result indicates that the abnormal target exists in the detection area, images acquired in a first reference time period are determined as the N frames of images.

That is, detection may be performed based on the infrared signal of the detection area first. When the abnormal target is detected in the detection area, image acquisition is performed on the detection area to perform abnormal target detection on the acquired images. In this way, the power consumption of the detection device can be reduced.

For example, when the first detection result indicates that there is an abnormal target in the detection area, image acquisition may be performed on the detection area, and determining the first detection result based on the infrared signal detected in the detection area is stopped. In this way, the power consumption of the detection device can be further reduced.

In some embodiments, said performing image acquisition on the detection area and determining the images acquired within the first reference time period as the N frames of images may include the following two implementations.

In the first implementation, within the first reference time period, the image sensor acquires an optical image of the detection area every second reference time period, and the second reference time period is less than or equal to the first reference time period; photoelectric conversion is performed on the optical image to obtain electrical signals corresponding to the optical image; digital conversion is performed on the electrical signals corresponding to the optical image to obtain binary image data; pixel conversion is performed on the binary image data to obtain a first image of the detection area; and the first image obtained within the first reference time period is determined as the N frames of images.

The first image is an invisible image, that is, an image that can be recognized by the machine but cannot be seen by human eyes. The image acquisition method in the present application is different from that of traditional cameras, and the acquired first image is an invisible image, such that additional operations on image data can be avoided, thereby simplifying the operation of image acquisition and reducing the costs of image acquisition, and furthermore avoiding revealing portrait data privacy.

To be specific, within the first reference time period, the image sensor acquires the optical image of the detection area every second reference time period and converts the optical image into corresponding electrical signals through the photoelectric conversion function of the image sensor. Digital conversion is performed on the electrical signals corresponding to the optical image to obtain the binary image data. The binary image data is preprocessed, pixel conversion is performed on the processed binary image data to obtain the first image of the detection area, and the first image is determined as the N frames of images.

For example, the optical image of the detection area may be detected by a photosensitive surface of the image sensor, the image sensor converts the optical image on the photosensitive surface into the electrical signals corresponding to the optical image. Since a frame of optical image has a plurality of pixels, each pixel may output one electrical signal, that is, one voltage value, through the photoelectric conversion function of the image sensor, and these electrical signals are digitally converted into binary image data. Because image processing only needs some important pixels in a frame of image, binary image data may be preprocessed based on a strategy, and binary image data corresponding to the important pixels may be retained. Pixel conversion is performed on the preprocessed binary image data to obtain the first image of the detection area, and the first image is determined as the N frames of images.

For example, assuming that the first reference time period is 200 ms and the second reference time period is 40 ms, the image sensor can acquire 5 frames of optical images of the detection area. The optical images of the detection area are detected by the photosensitive surface of the image sensor, and the image sensor converts the optical images on the photosensitive surface into electrical signals proportional to the optical images. Assuming that there are $320\times240$ pixels in one frame of optical image, $320\times240$ electrical signals can be obtained through the photoelectric conversion function of the image sensor. These electrical signals are digitally converted to obtain $320\times240$ pieces of binary image data. Since image processing may not require so much image data, preliminary filtering and preset threshold processing are performed on the binary image data based on a strategy, and binary image data corresponding to some important pixels are retained. Then, pixel conversion is performed on the binary image data to obtain the first image of the detection area, and the first image is determined as the N frames of images.

In the second implementation method, the detection area is photographed through a camera every second reference time period within the first reference time period to obtain a second image of the detection area and the second image is a visible image; and the second image photographed within the first reference time period is determined as the N frames of images.

In other words, the detection area is photographed through the camera every second reference time period within the first reference time period to obtain the second image of the detection area, and the second image photographed within the first reference time period may be determined as the N frames of images. For example, assuming that the first reference time period is 200 ms and the second reference time period is 40 ms, the camera can capture 5 frames of images of the detection area, and the 5 frames of images may be determined as the N frames of images.

In step 403, abnormal target detection is performed on the N frames of images to obtain a second detection result, and the second detection result is used to indicate whether the abnormal target exists in the detection area.

For example, when the N frames of images are the second images captured by the camera, the N frames of images may be preprocessed, and then abnormal target detection is performed on the N frames of preprocessed images. For example, the preprocessing operation may include converting the format or size of the N frames of images, and segmenting and compressing each of the N frames of images.

In some embodiments, the operation of performing abnormal target detection on the N frames of images to obtain the second detection result may include: abnormal target detection is performed on the N frames of images; and if the abnormal target is detected in one of the N frames of images, it is determined that the abnormal target exists in the detection area, and if no abnormal target is detected in each of the N frames of images, it is determined that no abnormal target exists in the detection area.

For example, performing abnormal target detection on the N frames of images may include the following two implementations.

In the first implementation, abnormal target detection is performed on the N frames of images in parallel.

To be specific, abnormal target detection is performed on each of the N frames of images at the same time; and if the abnormal target is detected in at least one of the N frames of images, it can be determined that the abnormal target exists in the detection area; and if no abnormal target is detected in each of the N frames of images, it can be determined that no abnormal target exists in the detection area.

In the second implementation, abnormal target detection is performed on the N frames of images sequentially.

For example, the first of the N frames of images is determined as a to-be-detected third image, and abnormal target detection is performed on the third image; and if the abnormal target is detected in the third image, it is determined that the abnormal target exists in one of the N frames of images; or if no abnormal target is detected in the third image, a next frame of the third image is determined as a to-be-detected third image, and the step of performing abnormal target detection on the third image is repeated until the abnormal target is detected in one of the N frames of images or no abnormal target is detected in each of the N frames of images.

For example, assuming that N is 3, the first of the three frames of images is selected, and abnormal target detection is performed on the first frame of image. If the abnormal target is detected in the first frame of image, it can be determined that the abnormal target exists in the detection area, and the detection is stopped. If no abnormal target is detected in the first frame of image, the second of the three frames of images is selected, and abnormal target detection is performed on the second frame of image. If the abnormal target is detected in the second frame of image, it can be determined that the abnormal target exists in the detection area, and the detection is stopped. If no abnormal target is detected in the second frame of image, the third of the three frames of images is selected, and abnormal target detection is performed on the third frame of image. If the abnormal target is detected in the third frame of image, it can be determined that the abnormal target exists in the detection area. If no abnormal target is detected in the third frame of image, it can be determined that no abnormal target exists in the detection area.

In some other embodiments, performing abnormal target detection on the N frames of images to obtain the second detection result may include the following implementation steps.

In the process of performing abnormal target detection on the N frames of images, for a to-be-detected third image in any of the N frames, foreground detection is performed on the third image based on a background image model of the detection area, and the background image model is used to indicate a background image of the detection area.

The background image model of the detection area is a reference image feature of the background image of the detection area.

In other words, for a to-be-detected third image in any of the N frames,, foreground detection may be performed on the third image by comparing a difference between the third image and the background image without abnormal target in the detection area.

For example, feature extraction may be performed on the third image to obtain a reference image feature of the third image; a feature residual between the reference image feature of the third image and a reference image feature of the background image of the detection area is calculated; and in a case that the feature residual is greater than or equal to a feature residual threshold, it is determined that a foreground target exists in the third image.

The feature residual is used to indicate the difference between the third image and the background image of the detection area. The feature residual threshold may be obtained through big data statistics.

In other words, since the background image model of the detection area is the reference image feature of the background image of the detection area, the reference image feature of the third image may be extracted for comparison with the reference image feature of the background image of the detection area, and foreground detection is performed on the third image based on the comparison result. To be specific, the feature residual between the reference image feature of the third image and the reference image feature of the background image of the detection area is calculated. In a case that the feature residual is greater than or equal to the feature residual threshold, it is determined that the foreground target exists in the third image. In a case that the feature residual is less than the feature residual threshold, it is determined that no foreground target exists in the third image.

For example, when feature extraction is performed on the third image, the reference image feature of the third image may be determined based on binary image data corresponding to the third image through the following formula:

$$ L = \sum_{p=0}^{p-1} 2^p S(I_p - I_c) $$

L indicates the reference image feature of the third image, $I_p$ indicates binary image data corresponding to a $p^{th}$ pixel of the third image, S indicates a coordinate position of the $p^{th}$ pixel, and $I_c$ indicates binary image data corresponding to a center pixel of the third image. For example, the coordinate position of the center pixel in the third image corresponding to $I_c$ may be denoted as $(x_c, y_c)$.

For example, it is assumed that the third image includes 100 pixels. When p=100, binary image data corresponding to each of the 100 pixels is subtracted from the binary image data corresponding to the center pixel of the third image, and the reference image feature of the third image may be obtained through summing according to the above formula. Assuming that the feature residual threshold is 5, the reference image feature of the third image is 10, and the reference image feature of the background image of the detection area is 2, it can be determined that the feature residual is 8, which is greater than the feature residual threshold, and then it can be determined that the foreground target exists in the third image.

If the foreground target different from the background image of the detection area is detected in the third image, a height and a width of the foreground target are determined.

The foreground target is a target that does not belong to the background image of the detection area, that is, a foreign target of the detection area. The foreground target in the detection area may be any object such as a human body, a vehicle, a small animal, and may not be an abnormal target to be detected. Therefore, in order to avoid detection errors, it is necessary to further determine whether the foreground target is the abnormal target.

For example, the width and the height of the foreground target may be determined based on coordinates of pixels in the third image which are quite different from the binary image data of the background image of the detection area.

After the height and the width of the foreground target are determined, whether the foreground target is the abnormal target may be determined based on the height and the width of the foreground target. For example, determining whether the foreground target is the abnormal target based on the height and the width of the foreground target may include the following three implementations.

In the first implementation, a ratio between the width and the height of the foreground target is calculated to obtain an aspect ratio of the foreground target; and if the aspect ratio of the foreground target falls in a reference aspect ratio range, it is determined that the foreground target is the abnormal target.

The reference aspect ratio range is a reference aspect ratio range corresponding to abnormal targets, and may be obtained by making statistics on a large number of abnormal target images. For example, if the abnormal target is a human body, statistics on the heights and widths of the human body in different postures and the heights and widths of different people in the same posture may be made based on a large number of human body images, and a reference aspect ratio range corresponding to human body is obtained based on the data.

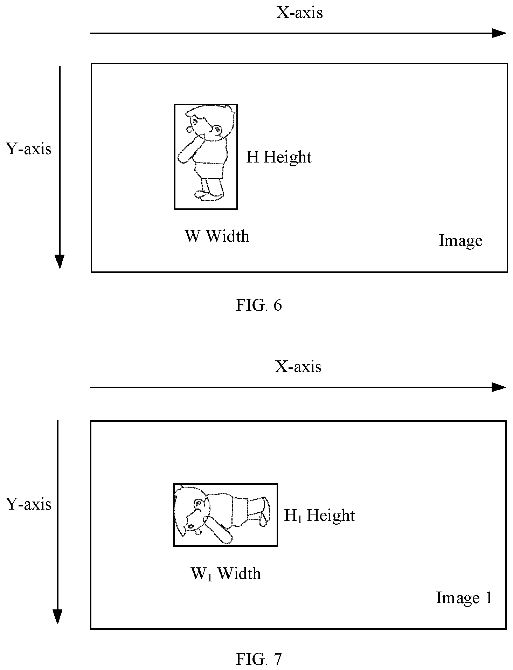

For example, FIG. 6 shows an image of a human body standing upright. The width of the human body is W, the height is H, and the aspect ratio is W/H. FIG. 7 shows an image of a human body lying down. The width of the human body is Wi, the height is Hi, and the aspect ratio is $W_1/H_1$.

To be specific, after the height and the width of the foreground target are determined, the ratio between the width and the height of the foreground target may be calculated to obtain the aspect ratio of the foreground target. The aspect ratio of the foreground target is compared with the reference aspect ratio range obtained through big data statistics. In a case that the aspect ratio of the foreground target falls in the reference aspect ratio range, it may be determined that the foreground target is the abnormal target. In a case that the aspect ratio of the foreground target falls outside the reference aspect ratio range, it may be determined that the foreground target is not the abnormal target.

For example, it is assumed that the reference aspect ratio range is 1:5 to 5:1, and the foreground target is 0.6 m in width, 1.8 m in height and 1:3 in aspect ratio. It can be determined that the aspect ratio of the foreground target falls in the reference aspect ratio range, and then it is determined that the foreground target is the abnormal target.

In the second implementation, the height and the width of the third image are determined; a ratio between the width and the height of the foreground target is calculated to obtain an aspect ratio of the foreground target; a first ratio between the width of the foreground target and the width of the third image is calculated; a second ratio between the height of the foreground target and the height of the third image is calculated; and in a case that the aspect ratio of the foreground target falls in a reference aspect ratio range, the first ratio falls in a first reference ratio range and the second ratio falls in a second reference ratio range, it is determined that the foreground target is the abnormal target.

The first reference ratio range and the second reference ratio range may be obtained through big data statistics.

In other words, after the height and the width of the foreground target are determined, the ratio between the width and the height of the foreground target may be calculated to obtain the aspect ratio of the foreground target. The aspect ratio of the foreground target is compared with a reference aspect ratio obtained through big data statistics. In addition, the width and height of the third image are determined, the first ratio between the width of the foreground target and the width of the third image is calculated; and the second ratio between the height of the foreground target and the height of the third image is calculated. In a case that the aspect ratio of the foreground target falls in the reference aspect ratio range, the first ratio falls in the first reference ratio range, and the second ratio falls in the second reference ratio range, it is determined that the foreground target is the abnormal target; and in a case that the aspect ratio of the foreground target falls outside the reference aspect ratio range, or the first ratio falls outside the first reference ratio range, or the second ratio falls outside the second reference ratio range, it can be determined that the foreground target is not the abnormal target.

For example, it is assumed that the reference aspect ratio range is 1:5 to 5:1, the first reference ratio range is 1:20 to 1:5, the second reference ratio range is 1:20 to 1:2, the width and the height of the foreground target are 0.6 m and 1.8 m, and the width and height of the third image are 6 m and 4 m. The aspect ratio of the foreground target is 1:3, the first ratio is 1:10 and the second ratio is 9:20. It can be determined that the aspect ratio of the foreground target falls in the reference aspect ratio range, the first ratio falls in the first reference ratio range, and the second ratio falls in the second reference ratio range, and then it can be determined that the foreground target is the abnormal target. Assuming that the height of the third image in the above example is changed to 3 m, and other data is the same. It can be determined that the second ratio is 3:5, the aspect ratio of the foreground target falls in the reference aspect ratio range, the first ratio falls in the first reference ratio range, but the second ratio falls outside the second reference ratio range, and then it can be determined that the foreground target is not the abnormal target.

In the third implementation, the height and the width of the third image are determined, and the ratio between the width and the height of the foreground target is calculated to obtain the aspect ratio of the foreground target. A third ratio is determined, and the third ration is a ratio between the width of the foreground target and the width of the third image, or a ratio between the height of the foreground target and the height of the third image. In a case that the aspect ratio of the foreground target falls in the reference aspect ratio range, and the third ratio falls in a third reference ratio range, it is determined that the foreground target is the abnormal target.

If the third ratio is the ratio between the width of the foreground target and the width of the third image, the third reference ratio range is the foregoing first reference ratio range; and if the third ratio is the ratio between the height of the foreground target and the height of the third image, the third reference ratio range is the foregoing second reference ratio range.

If it is determined that the foreground target is the abnormal target based on the height and the width of the foreground target, it is determined that the abnormal target exists in the third image.

When it is determined that the foreground target is the abnormal target, it can be determined that the abnormal targets exists in the third image, and then it can be determined that the abnormal target exists in the detection area.

For example, abnormal target detection is performed on the N frames of images. After the second detection result is obtained, if the second detection result indicates that no abnormal target exists in the detection area, the detection area continues to be detected based on the infrared signal detected in the detection area.

For another example, when the detection area continues to be detected based on the infrared signal detected in the detection area, image acquisition on the detection area and abnormal target detection on the obtained images may be stopped so as to reduce the power consumption of the detection device.

For example, in the process of performing abnormal target detection on the N frames of images, when the abnormal target is detected in a target image of the N frames of images, images after the target image may continue to be detected for changes of position or attitude of the abnormal target.

In step 404: When both the first detection result and the second detection result indicate that the abnormal target exists in the detection area, it is determined that the abnormal target exists in the detection area.

It is too one-sided to determine whether the abnormal target exists in the detection area based on the first detection result or the second detection result alone, and thus the result may be inaccurate. Therefore, the first detection result and the second detection result are both used for determining in the present application. When the first detection result indicates that the abnormal target exists in the detection area, it indicates that the abnormal target in the detection area is determined based on detection of the infrared signal, and verification is performed based on the second detection result. When the second detection result also indicates that the abnormal target exists in the detection area, it indicates that the abnormal target in the detection area is determined based on detection of the N frames of images. In this case, it can be determined that the abnormal target exists in the detection area.

In other words, when determining whether the abnormal target exists in the detection area, it is necessary to combine infrared detection and image detection. Only when the abnormal target in the detection area is determined based on both infrared detection and image detection, the abnormal target in the detection area can be determined.

In the embodiments of the present application, a first detection result may be determined based on an infrared signal detected in a detection area, N frames of images of the detection area are obtained and abnormal target detection is performed on the N frames of images to obtain a second detection result. In a case that both the first detection result and the second detection result indicate that an abnormal target exists in the detection area, it is determined that the abnormal target exists in the detection area. In this way, infrared detection can be combined with image detection to determine whether the abnormal target exists in the detection area, which improves the accuracy of detection results. In addition, because image detection is not easily interfered by external factors, detection errors caused by the infrared sensor and the microwave detector interfered by external factors can be reduced, thereby further improving the accuracy of detection results.

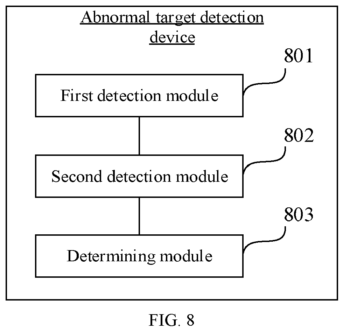

FIG. 8 is a schematic diagram of a device for detecting an abnormal target according to an exemplary embodiment. The device for detecting an abnormal target may be implemented by software, hardware or a combination of thereof. Referring to FIG. 8, the device may include:

a first detection module 801, configured to determine a first detection result based on an infrared signal detected in a detection area, and the first detection result is used to indicate whether an abnormal target exists in the detection area;

a second detection module 802, configured to: obtain N frames of images of the detection area, and perform abnormal target detection on the N frames of images to obtain a second detection result, the second detection result is used to indicate whether the abnormal target exists in the detection area, and N is a positive integer;

a determining module 803, configured to: determine that the abnormal target exists in the detection area, in a case that both the first detection result and the second detection result indicate that the abnormal target exists in the detection area.

In a possible implementation of the present application, the second detection module 802 is configured to: perform image acquisition on the detection area and determine images acquired within a first reference time period as the N frames of images, when the first detection result is determined based on the infrared signal detected in the detection area.

In a possible implementation of the present application, the second detection module 802 is configured to: perform image acquisition on the detection area and determine images acquired within a first reference time period as the N frames of images, after the first detection result is determined based on the infrared signal detected in the detection area, and in a case that the first detection result indicates that the abnormal target exists in the detection area.

In a possible implementation of the present application, the second detection module 802 is configured to:

acquire an optical image of the detection area through an image sensor every second reference time period within the first reference time period, and the second reference time period is less than or equal to the first reference time period;

perform photoelectric conversion on the optical image to obtain electrical signals corresponding to the optical image;

perform digital conversion on the electrical signals corresponding to the optical image to obtain binary image data;

perform pixel conversion on the binary image data to obtain a first image of the detection area, and the first image is an invisible image; and

determine the first image obtained within the first reference time period as the N frames of images.

In a possible implementation of the present application, the second detection module 802 is configured to:

photograph the detection area through a camera every second reference time period within the first reference time period to obtain a second image of the detection area, and the second image is a visible image; and

determine the second image obtained within the first reference time period as the N frames of images.

In a possible implementation of the present application, the second detection module 802 is further configured to:

perform image acquisition on the detection area and trigger the first detection module to stop detecting the detection area through an infrared sensor, in a case that the first detection result indicates that the abnormal target exists in the detection area; and

trigger the first detection module to continue to detect the detection area through the infrared sensor, in a case that the second detection result indicates that no abnormal target exists in the detection area.

In a possible implementation of the present application, the second detection module 802 is configured to:

perform abnormal target detection on the N frames of images; and

determine that the abnormal target exists in the detection area, in a case that the abnormal target is detected in one of the N frames of images; or

determine that no abnormal target exists in the detection area, in a case that no abnormal target is detected in each of the N frames of images.

In a possible implementation of the present application, the second detection module 802 is configured to:

perform abnormal target detection on the N frames of images in parallel; or

determine a first of the N frames of images as a to-be-detected third image and perform abnormal target detection on the third image; and determine the abnormal target exists in one of the N frames of images, in a case that the abnormal target is detected in the third image; and determine a next frame of the third image as a to-be-detected third image and repeat the step of performing abnormal target detection on the third image until the abnormal target is detected in one of the N frames of images or that no abnormal target is detected in each of the N frames of images, in a case that no abnormal target is detected in the third image.

In a possible implementation of the present application, the second detection module 802 includes:

a detection unit, configured to: in the process of performing abnormal target detection on the N frames of images, for a to-be-detected third image in any of the N frames, perform foreground detection on the third image based on a background image model of the detection area, and the background image model is used to indicate a background image of the detection area;

a first determining unit, configured to: determine a height and a width of the foreground target, in a case that a foreground target different from the background image of the detection area is detected in the third image; and

a second determining unit, configured to: determine that the abnormal target exists in the third image, in a case that the foreground target is determined as the abnormal target based on the height and the width of the foreground target.

In a possible implementation of the present application, the background image model of the detection area is a reference image feature of the background image of the detection area; and

the detection unit is configured to:
perform feature extraction on the third image to obtain a reference image feature of the third image;
calculate a feature residual between the reference image feature of the third image and the reference image feature of the background image of the detection area; and
determine that the foreground target exists in the third image, in a case that the feature residual is greater than or equal to a feature residual threshold.

In a possible implementation of the present application, the detection unit is configured to:
determine the reference image feature of the third image based on binary image data corresponding to the third image through the following formula:

$$L = \sum_{p=0}^{p-1} 2^p S(I_p - I_c)$$

L indicates the reference image feature of the third image, $I_p$ indicates binary image data corresponding to a $p^{th}$ pixel of the third image, S indicates a coordinate position of the $p^{th}$ pixel, and $I_c$ indicates binary image data corresponding to a center pixel of the third image.

In a possible implementation of the present application, the detection unit is configured to:

calculate a ratio between the width and the height of the foreground target to obtain an aspect ratio of the foreground target; and
determine the foreground target as the abnormal target, in a case that the aspect ratio of the foreground target falls in a reference aspect ratio range.

In a possible implementation of the present application, the detection unit is configured to:

determine a height and a width of the third image; and
said determining the foreground target as the abnormal target based on the height and the width of the foreground target includes:
calculating a ratio between the width and the height of the foreground target to obtain an aspect ratio of the foreground target;
calculating a first ratio between the width of the foreground target and the width of the third image;
calculating a second ratio between the height of the foreground target and the height of the third image; and
determining the foreground target as the abnormal target, in a case that the aspect ratio of the foreground target falls in a reference aspect ratio range, the first ratio falls in a first reference ratio range and the second ratio falls in a second reference ratio range.

In a possible implementation of the present application, the first detection module 801 is configured to:

detect the infrared signal in the detection area through an infrared sensor and convert the detected infrared signal into electrical signals, and the infrared sensor includes at least an infrared probe and at least two Fresnel lenses; and
determine the first detection result based on a vibration amplitude of the electrical signals.

In a possible implementation of the present application, the first detection module 801 is configured to:
determine that the abnormal target exists in the detection area, in a case that the vibration amplitude of the electrical signals falls in a reference amplitude range.

In a possible implementation of the present application, the first detection module 801 is configured to:
determine that the abnormal target exists in the detection area, in a case that the vibration amplitude of the electrical signals falls in a reference amplitude range and a vibration frequency of the electrical signals falls in a reference frequency range.

In the embodiments of the present application, a first detection result may be determined based on an infrared signal detected in a detection area, N frames of images of the detection area are obtained and abnormal target detection is performed on the N frames of images to obtain a second detection result. In a case that both the first detection result and the second detection result indicate that an abnormal target exists in the detection area, it is determined that the abnormal target exists in the detection area. In this way, infrared detection can be combined with image detection to determine whether the abnormal target exists in the detection area, which improves the accuracy of detection results.

In addition, because image detection is not easily interfered by external factors, detection errors caused by the infrared sensor and the microwave detector interfered by external factors can be reduced, thereby further improving the accuracy of detection results.

It should be noted that the device for detecting an abnormal target provided in the foregoing embodiment is only illustrated by an example of division into the above-mentioned functional modules. In practical applications, the above-mentioned functions may be allocated to different functional modules according to needs. To be specific, the internal structure of the device is divided into a plurality of sub-modules to complete all or some of the functions. In addition, the device for detecting an abnormal target provided in the above embodiment belongs to the same concept as the method for detecting an abnormal target embodiment, and the specific implementation process is detailed in the method embodiment. Details are not repeated here.

A person of ordinary skill in the art can understand that all or part of steps in the embodiments may be completed by hardware or by a program instructing relevant hardware. The programs may be stored in a computer-readable storage medium, and the storage medium may be a read-only memory (ROM), a disk, or a compact disc.

The above descriptions are merely preferred examples of the present application and are not intended to limit the present application. Any modification, equivalent replacement and improvement within the spirit and principle of the present application shall be included within the protection scope of the present application.

**Claims**

1. A method for detecting an abnormal target, wherein the method comprises:

   determining a first detection result based on an infrared signal detected in a detection area, wherein the first detection result is used to indicate whether an abnormal target exists in the detection area;
   acquiring N frames of images of the detection area and performing abnormal target detection on the N frames of images to obtain a second detection result, wherein the second detection result is used to indicate whether the abnormal target exists in the detection area and N is a positive integer; and
   determining that the abnormal target exists in the detection area, in a case that both the first detection result and the second detection result indicate that the abnormal target exists in the detection area.

2. The method according to claim 1, wherein said acquiring the N frames of images of the detection area comprises: performing image acquisition on the detection area and determining images acquired within a first reference time period as the N frames of images, while determining the first detection result based on the infrared signal detected in the detection area.

3. The method according to claim 1, wherein said acquiring the N frames of images of the detection area comprises: performing image acquisition on the detection area and determining images acquired within a first reference time period as the N frames of images, after determining the first detection result based on the infrared signal detected in the detection area, in a case that the first detection result indicates that the abnormal target exists in the detection area.

4. The method according to claim 2 or 3, wherein said performing image acquisition on the detection area and determining the images acquired within the first reference time period as the N frames of images comprises:

   acquiring an optical image of the detection area through an image sensor every second reference time period within the first reference time period, wherein the second reference time period is less than or equal to the first reference time period;
   performing photoelectric conversion on the optical image to obtain electrical signals corresponding to the optical image;
   performing digital conversion on the electrical signals corresponding to the optical image to obtain binary image data;
   performing pixel conversion on the binary image data to obtain a first image of the detection area, wherein the first image is an invisible image; and
   determining the first image obtained within the first reference time period as the N frames of images.

5. The method according to claim 2 or 3, wherein said performing image acquisition on the detection area and determining the images acquired within the first reference time period as the N frames of images comprises:

photographing the detection area through a camera every second reference time period within the first reference time period to obtain a second image of the detection area, wherein the second image is a visible image; and determining the second image captured within the first reference time period as the N frames of images.

6. The method according to claim 3, wherein said performing image acquisition on the detection area in a case that the first detection result indicates that the abnormal target exists in the detection area comprises:

performing image acquisition on the detection area and stopping determining the first detection result based on the infrared signal detected in the detection area, in a case that the first detection result indicates that the abnormal target exists in the detection area; and
after said performing abnormal target detection on the N frames of images to obtain the second detection result, the method further comprises:
continuing to determine the first detection result based on the infrared signal detected in the detection area, in a case that the second detection result indicates that no abnormal target exists in the detection area.

7. The method according to claim 1, wherein said performing abnormal target detection on the N frames of images to obtain the second detection result comprises:

performing abnormal target detection on the N frames of images;
determining that the abnormal target exists in the detection area, in a case that the abnormal target is detected in one of the N frames of images; and
determining that no abnormal target exists in the detection area, in a case that no abnormal target is detected in each of the N frames of images.

8. The method according to claim 7, wherein said performing abnormal target detection on the N frames of images comprises:

performing abnormal target detection on the N frames of images in parallel; or
determining a first of the N frames of images as a to-be-detected third image and performing abnormal target detection on the third image; determining that the abnormal target exists in one of the N frames of images, in a case that the abnormal target is detected in the third image; and determining a next frame of the third image as a to-be-detected third image and repeating the step of performing abnormal target detection on the third image until the abnormal target is detected in one of the N frames of images or no abnormal target is detected in each of the N frames of images, in a case that no abnormal target is detected in the third image.

9. The method according to claim 7, wherein the method further comprises:

in the process of performing abnormal target detection on the N frames of images, for a to-be-detected third image in any of the N frames, performing foreground detection on the third image based on a background image model of the detection area, wherein the background image model is used to indicate a background image of the detection area;
determining a height and a width of the foreground target, in a case that a foreground target different from the background image of the detection area is detected in the third image; and
determining that the abnormal target exists in the third image, in a case that the foreground target is determined as the abnormal target based on the height and the width of the foreground target.

10. The method according to claim 9, wherein the background image model of the detection area is a reference image feature of the background image of the detection area; and
said performing foreground detection on the third image based on the background image model of the detection area comprises:

performing feature extraction on the third image to obtain a reference image feature of the third image;
calculating a feature residual between the reference image feature of the third image and the reference image feature of the background image of the detection area; and
determining that the foreground target exists in the third image, in a case that the feature residual is greater than or equal to a feature residual threshold.

11. The method according to claim 10, wherein said performing feature extraction on the third image to obtain the reference image feature of the third image comprises:

determining the reference image feature of the third image based on binary image data corresponding to the third image through the following formula:

$$L = \sum_{p=0}^{p-1} 2^p S(I_p - I_c)$$

wherein, L indicates the reference image feature of the third image, $I_p$ indicates binary image data corresponding to a $p^{th}$ pixel of the third image, S indicates a coordinate position of the $p^{th}$ pixel, and $I_c$ indicates binary image data corresponding to a center pixel of the third image.

12. The method according to claim 9, wherein after said determining the height and the width of the foreground target, the method further comprises:

calculating a ratio between the width and the height of the foreground target to obtain an aspect ratio of the foreground target; and
determining the foreground target as the abnormal target, in a case that the aspect ratio of the foreground target falls in a reference aspect ratio range.

13. The method according to claim 9, wherein before said determining that the foreground target is the abnormal target based on the height and the width of the foreground target, the method further comprises:

determining a height and a width of the third image; and
said determining that the foreground target is the abnormal target based on the height and the width of the foreground target comprises:

calculating a ratio between the width and the height of the foreground target to obtain an aspect ratio of the foreground target;
calculating a first ratio between the width of the foreground target and the width of the third image;
calculating a second ratio between the height of the foreground target and the height of the third image; and
determining the foreground target as the abnormal target, in a case that the aspect ratio of the foreground target falls in a reference aspect ratio range, the first ratio falls in a first reference ratio range, and the second ratio falls in a second reference ratio range.

14. The method according to claim 1, wherein said determining the first detection result based on the infrared signal detected in the detection area comprises:

detecting the infrared signal in the detection area through an infrared sensor and converting the detected infrared signal into electrical signals, wherein the infrared sensor comprises at least an infrared probe and at least two Fresnel lenses; and
determining the first detection result based on a vibration amplitude of the electrical signals.

15. The method according to claim 14, wherein said determining the first detection result based on the vibration amplitude of the electrical signals comprises:
determining that the abnormal target exists in the detection area, in a case that the vibration amplitude of the electrical signals falls in a reference amplitude range.

16. The method according to claim 14, wherein said determining the first detection result based on the vibration amplitude of the electrical signals comprises:
determining that the abnormal target exists in the detection area, in a case that the vibration amplitude of the electrical signals falls in a reference amplitude range and a vibration frequency of the electrical signals falls in a reference frequency range.

17. A detection device, wherein the detection device comprises an infrared detection unit, an image processing unit and a processor, and the infrared detection unit comprises at least an infrared sensor;

the infrared detection unit is configured to detect an infrared signal in a detection area through the infrared sensor and send the detected signal to the processor;

the image processing unit is configured to acquire N frames of images of the detection area, perform abnormal target detection on the N frames of images to obtain a second detection result, and send the second detection result to the processor, wherein the second detection result is used to indicate whether an abnormal target exists in the detection area and N is a positive integer; and

the processor is configured to determine a first detection result based on the detected signal, and determine that the abnormal target exists in the detection area in a case that both the first detection result and the second detection result indicate that the abnormal target exists in the detection area, wherein the first detection result is used to indicate whether the abnormal target exists in the detection area.

18. The detection device according to claim 17, wherein the processor is configured to:
control the image processing unit to acquire N frames of images of the detection area within a first reference time period and perform abnormal target detection on the N frames of images, when the infrared detection unit detects the infrared signal in the detection area through the infrared sensor.

19. The detection device according to claim 17, wherein the processor is configured to:
after determining that the abnormal target exists in the detection area based on the detected signal sent by the infrared detection unit, control the image processing unit to acquire N frames of images of the detection area within a first reference time period, and perform abnormal target detection on the N frames of images.

20. The detection device according to claim 18 or 19, wherein the image processing unit comprises an image sensor, and the image processing unit is configured to:

acquire an optical image of the detection area through the image sensor every second reference time period within the first reference time period, wherein the first reference time period is greater than or equal to the second reference time period;

perform photoelectric conversion on the optical image to obtain electrical signals corresponding to the optical image;

perform digital conversion on the electrical signals corresponding to the optical image to obtain binary image data;

perform pixel conversion on the binary image data to obtain a first image of the detection area, wherein the first image is an invisible image; and

determine the first image obtained within the first reference time period as the N frames of images.

21. The detection device according to claim 19, wherein the processor is configured to:

after determining that the abnormal target exists in the detection area based on the detected signal sent by the infrared detection unit, control the image processing unit to acquire the N frames of images of the detection area within the first reference time period, perform abnormal target detection on the N frames of images, and control the infrared detection unit to stop detecting the infrared signal in the detection area through the infrared sensor; and

control the infrared detection unit to continue to detect the infrared signal in the detection area through the infrared sensor, in a case that no abnormal target is defected in the detection area through the image processing unit.

22. The detection device according to claim 17, wherein the image processing unit is configured to:

perform abnormal target detection on the N frames of images; and

determine that the abnormal target exists in the detection area, in a case that the abnormal target is detected in one of the N frames of images; and

determine that no abnormal target exists in the detection area, in a case that no abnormal target is detected in each of the N frames of images.

23. The detection device according to claim 22, wherein the image processing unit is configured to:

perform abnormal target detection on the N frames of images in parallel; or

determine a first of the N frames of images as a to-be-detected third image, and perform abnormal target detection on the third image; determine that the abnormal target exists in one of the N frames of images, in a case that the abnormal target is detected in the third image; and determine a next frame of the third image as a to-be-detected third image and repeat the step of performing abnormal target detection on the third image until the abnormal target is detected in one of the N frames of images or no abnormal target is detected in each of the N frames of images, in a case that no abnormal target is detected in the third image.

24. The detection device according to claim 22, wherein the image processing unit is configured to:

in the process of performing abnormal target detection on the N frames of images, for a to-be-detected third image in any of the N frames, perform foreground detection on the third image based on a background image model of the detection area, wherein the background image model is used to indicate a background image of the detection area;
determine a height and a width of the foreground target, in a case that a foreground target different from the background image of the detection area is detected in the third image; and
determine that the abnormal target exists in the third image, in a case that the foreground target is determined as the abnormal target based on the height and the width of the foreground target.

25. The detection device according to claim 17, wherein the infrared sensor comprises at least an infrared probe and at least two Fresnel lenses, and the infrared sensor is configured to:

focus the infrared signal in the detection area through the at least two Fresnel lenses; and
sense the infrared signal focused through the at least two Fresnel lenses and convert the sensed infrared signal into the detected signal by the infrared probe.

26. A computer readable storage medium, wherein the computer readable storage medium stores instructions, and when the instructions are executed by a processor, steps of the method according to any one of claims 1 to 16 are implemented.

Infrared detection unit ⟋101

Processor ⟋103

Image processing unit ⟋102

FIG. 1

Infrared detection unit 101

Infrared sensor

First power supply

Infrared sensor signal filtering-amplifying unit

Processor 103

Image processing unit 102

Image sensor

Image sensor

Image preprocessing unit

Image pixel conversion unit

Second power supply

CV engine unit

FIG. 2

Determining a first detection result based on an infrared signal detected in a detection area, wherein the first detection result is used to indicate whether an abnormal target exists in the detection area ⟶ 301

Acquiring N frames of images of the detection area, and performing abnormal target detection on the N frames of images to obtain a second detection result, wherein the second detection result is used to indicate whether the abnormal target exists in the detection area, and N is a positive integer ⟶ 302

Determining that the abnormal target exists in the detection area, in a case that both the first detection result and the second detection result indicate that the abnormal target exists in the detection area ⟶ 303

FIG. 3

Determining a first detection result based on an infrared signal detected in a detection area, wherein the first detection result is used to indicate whether an abnormal target exists in the detection area ⟋ 401

Acquiring N frames of images of the detection area ⟋ 402

Performing abnormal target detection on the N frames of images to obtain a second detection result, wherein the second detection result is used to indicate whether the abnormal target exists in the detection area ⟋ 403

Determining that the abnormal target exists in the detection area, in a case that both the first detection result and the second detection result indicate that the abnormal target exists in the detection area ⟋ 404

FIG. 4

FIG. 5

X-axis

Y-axis

H Height

W Width

Image

FIG. 6

X-axis

Y-axis

$H_1$ Height

$W_1$ Width

Image 1

FIG. 7

FIG. 8

## INTERNATIONAL SEARCH REPORT

| International application No. |
| --- |
| **PCT/CN2019/124327** |

| A. | CLASSIFICATION OF SUBJECT MATTER |
| --- | --- |

G06K 9/00(2006.01)i

According to International Patent Classification (IPC) or to both national classification and IPC

| B. | FIELDS SEARCHED |
| --- | --- |

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT; CNKI; WPI; EPODOC: 异常, 目标, 检测, 红外, 传感器, 图像, abnormal, object, target, detect, infrared, sensor, image, picture

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 105163095 A (HUNAN ZHIHUI PING'AN TECHNOLOGY CO., LTD.) 16 December 2015 (2015-12-16)<br>description, paragraphs [0006]-[0014] | 1-26 |
| A | CN 101339688 A (BEIJING VIMICRO CORP.) 07 January 2009 (2009-01-07)<br>entire document | 1-26 |
| A | CN 108388845 A (LI, Gangyi) 10 August 2018 (2018-08-10)<br>entire document | 1-26 |
| A | CN 104866842 A (NATIONAL UNIVERSITY OF DEFENSE TECHNOLOGY) 26 August 2015 (2015-08-26)<br>entire document | 1-26 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 February 2020** | **12 March 2020** |

| Name and mailing address of the ISA/CN | Authorized officer |
| --- | --- |
| **China National Intellectual Property Administration**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2019/124327**

| Patent document cited in search report | | | Publication date (day/month/year) | Patent family member(s) | Publication date (day/month/year) |
|---|---|---|---|---|---|
| CN | 105163095 | A | 16 December 2015 | None | |
| CN | 101339688 | A | 07 January 2009 | None | |
| CN | 108388845 | A | 10 August 2018 | None | |
| CN | 104866842 | A | 26 August 2015 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910508062